(19) Europäisches Patentamt
European Patent Office
Office européen des brevets

(11) Publication number: **0 256 162 B1**

# (12) EUROPEAN PATENT SPECIFICATION

(45) Date of publication of the patent specification: **25.04.90**

(51) Int. Cl.[4]: **C08G 18/40**, C08G 18/58, C08G 18/67, C08G 18/22; C09J 175/04, C09J 163/00

(21) Application number: **86111505.3**

(22) Date of filing: **20.08.86**

(54) **Polyol/Polyepoxide/Polyisocyanate Adhesive composition and its use.**

(43) Date of publication of application:
**24.02.88 Bulletin 88/8**

(45) Publication of the grant of the patent:
**25.04.90 Bulletin 90/17**

(84) Designated Contracting States:
**AT BE CH DE FR GB IT LI LU NL SE**

(56) References cited:
**EP-A- 0 148 344**
**US-A- 3 012 984**
**US-A- 3 478 126**
**US-A- 4 507 447**

(73) Proprietor: **Ashland Oil, Inc., 1000 Ashland Drive, Russell Kentucky 41169(US)**

(72) Inventor: **Goel, Anil B., 373 Eastworth Court, Worthington Ohio 43085(US)**
Inventor: **Richards, Harvey J., 2210 Bristol Road, Columbus Ohio 43220(US)**
Inventor: **Grimm, Robert A., 1810 Ivanhoe Ct., Columbus Ohio 43220(US)**

(74) Representative: **Vossius & Partner, Siebertstrasse 4 P.O. Box 86 07 67, D-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

This invention relates to an adhesive composition, rising a mixture of a polyol and a polyepoxide and a polyisocyanate and more particularly pertains to an adhesive composition which gives fast curing bonds of high adhesiveness and having high heat resistance.

Adhesive compositions based on polyols and polyisocyanates are known. Although these adhesive compositions provide good adhesion properties toward metal and plastic surfaces, they usually decompose and lose adhesiveness when exposed for periods as short as 30 minutes to temperatures of 204°C or higher.

US-A 4 507 447 discloses polyurethane adhesive compositions which are useful for bonding metals, plastics, rubber etc., in particular for multiply composite films consisting of films of plastics being laminated to metal foil. The resultant bond should have adequate adhesion strength and improved heat resistance or chemical resistance. The polyurethane adhesive composition of US-A 4 507 447 comprises an organic polyisocyanate, a polyol, about 0.01 to 10 weight percent based on the total adhesive composition of an oxyacid of phosphorus or a derivative thereof, about 1 to 50 weight percent based on the total adhesive composition of an epoxy resin and about 0.05 to 20 weight percent based on the total adhesive composition of a silane coupling agent and wherein the ratio of the number of the NCO groups of the organic polyisocyanate to the number of active hydrogen groups of the polyol, the oxyacid of phosphorus or the derivative thereof and the epoxy resin is in the range of about 0.4 to 20.

In EP-A 148 344 a process for the preparation of polyurethane resins with improved heat-aging properties is described. In this process organic polyisocyanates are reacted with organic polyhydroxy compounds at reaction temperatures from 0 to 100°C, the equivalent ratio of isocyanate groups to hydroxyl groups ranging from 0.7:1 to 1.3:1, optionally in the presence of auxiliary compounds and additives known in polyurethane chemistry. This process is characterized in that the reaction is carried out in the presence of such an amount of at least one epoxy compound having a content of hydroxyl groups of at most 2.5% by weight and an epoxy equivalent weight of 100–300, which corresponds to an equivalent ratio of epoxy groups to isocyanate groups of from 0.1:1 to 1:1. The use of additional compounds such as tin (II) compounds is optional and not a critical feature to the process. The polyurethane resin obtained according to the process obviously is not an adhesive, but is useful for preparing shaped articles such as rods.

Although prior art polyurethane adhesive compositions, either single component or two-component, exhibit excellent adhesion properties, they are known to have poor performance when exposed to temperatures in the range of 204–218°C.

The technical problem underlying the present invention, therefore, is to provide solvent-free adhesive compositions which are curable under a wide variety of curing conditions to form a strong adhesive bond to a wide variety of substrates and which retain good bond shear strength even after 30 minutes exposure to temperatures of 204°C or more.

This technical problem is solved according to the invention by an adhesive composition comprising a mixture of a first component comprising a polyol and a polyepoxide, a second component comprising a polyisocyanate, and as a polyurethane catalyst a mixture of organo tin an organo iron compounds in an amount from about 0.001 to 5% by weight based on the weight of the first component, wherein the equivalent functionality ratio of hydroxyl to epoxy groups in the first component is within the range of from 98:2 to 50:50 and the equivalent ratio of isocyanate groups in the second component to the combined equivalent of hydroxyl and epoxy groups in the first component is in the range of from about 0.8 to 2.0, the epoxy group being equivalent to two hydroxyl groups.

A preferred catalyst is a mixture of fin (II) octoate and iron (III) acetylacetonate.)

The solvent-free adhesive composition of the present invention is curable under a wide variety of curing conditions (from room temperature or below to 250°C.) to form a strong adhesive bond to a wide variety of substrates. The bond retains exceptional bond shear strength even after 30 minutes exposure to temperatures of 204°C or more. Furthermore, the adhesive composition of this invention which involves polyaddition of a polyol, a polyepoxide and a polyisocyanate provides excellent adhesion to a variety of cured sheet molding compound (SMC) surfaces without the extensive surface preparation such at cleaning, degreasing, roughing and primary operations. Because the adhesive composition does not involve the use of a solvent, the usual concern for flammability, toxicity, time for evaporation, etc., often associated with solvent systems is obviated. The adhesive composition of the present invention after curing demonstrates excellent adhesion properties with high shear strength even after being exposed to temperatures up to about 218°C.

One convenient way to practice this invention is by the use of a two-component adhesive composition. One component comprises a mixture of a polyol and a polyepoxide. The equivalent functionality ratio (hydroxyl versus epoxy group) may vary in the range of 98/2 to 50/50. Usually the polyurethane catalyst is included in this component. The amount of the catalyst can vary from about 0.001 to 5% by weight based on the weight of combined polyol/polyepoxide in the frist component. Aromatic amines, particularly those with sterically bulky groups such as diethyl toluene diamine and other primary and secondary amines which are known to react slowly with epoxides can be included in the first component in amounts ranging from 0.5 to 10% by weight based on the total weight of the first component. The second component is a polyisocyanate and preferably an isocyanate prepolymer obtained from the reaction of a polyisocyanate (in excess) with a polyol. The equivalent ratio of the isocyanate groups in the second component to the combined equivalent of hydroxyl and epoxy groups in the first component should be in the range of from about 0.8 to 2.0, the epoxy group being equivalent to two hydroxyl groups.

Polyols useful for the adhesive composition of this invention include those compounds having at least two hydroxyl groups per molecule and having equivalent weights falling in the range of from 20 to 5000. Specific polyols include butane diol, cyclohexane dimethanol, tripropylene glycol, amide diols of the general formula

$$HO-A-NH\overset{O}{\overset{\|}{C}}-A'-OH$$

wherein A and A' are independently alkyl or aryl groups with 2 to 20 carbon atoms, urethane diols the general formula

$$HO-A-NH\overset{O}{\overset{\|}{C}}OA'-OH ,$$

wherein A and A' have the foregoing designation, polyether polyols, such as poly(tetra-methylene ether) diols, poly(propylene ether) polyols and polyester polyols.

Polyhydroxy polyethers are suitable polyols and preferably those having at least 2 hydroxyl groups per molecule. Polyhydroxy polyethers can be prepared by polymerization of epoxides such as ethylene oxide, propylene oxide, butylene oxide, tetrahydrofuran, styrene oxide, or epichlorohydrin either alone or by chemical addition to other materials. Suitable other materials include ethylene glycol, propylene glycol, trimethylol propane and 4,4'-dihydroxydiphenylpropane. Sucrose polyethers also may be used. Polybutadienes having hydroxyl groups as well as other known hydroxyl containing vinyl addition type polymers can be used as polyols in this invention. Hydroxyl groups containing polyesters, polythioethers, polyacetals, polycarbonates or polyesteramides of the types known for the formation of polyurethanes can also be used.

The polyepoxides useful for the adhesive compositions of the present invention can be monomeric or polymeric, saturated or unsaturated, aliphatic, cycloaliphatic, aromatic or heterocyclic, and they can be substituted if desired with other substituents besides the epoxy groups, e.g., hydroxyl groups, ether groups and halogen atoms. Typical polyepoxides suitable for the adhesive composition of this invention include those disclosed in U.S. Patents 2 500 600 and 2 324 483. Preferred are 1,2-epoxy compounds having an epoxide equivalence greater than 1, that is to say, compounds containing more than one 1,2-epoxide group in this molecule.

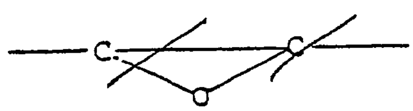 .

The 1,2-epoxide groups may be either terminal or inner ones. Particularly suitable terminal 1,2-epoxide groups are 1,2-epoxyethyl or 1,2-epoxypropyl groups. The latter may be linked to an oxygen atom, that is to say, they are glycidyl ether or glycidyl ester groups. Compounds with inner epoxide groups usually contain the 1,2-epoxide group in an aliphatic chain or in a cycloaliphatic ring.

As epoxy compounds containing an inner 1,2-epoxy group there are suitable epoxidized diolefins, dienes, or cyclic dienes, such as 1,2,5,6-diepoxy hexane, 1,2,4,5-diepoxy cyclohexane, dicyclopentadiene diepoxide, dipentene diepoxide, and vinyl cyclohexene diepoxide; epoxidized diolefinically unsaturated carboxylic acid esters, such as methyl-9,10,12,13-diepoxy stearate, or the dimethyl ester of 6,7,10,11-diepoxyhexadecane-1,16-dicarboxylic acid. Furthermore, there may be mentioned epoxidized mono-, di- or poly-acetals containing at least one cyclo-aliphatic 5-membered or 6-membered ring, to which at least two 1,2-epoxide groups are linked.

A widely used class of polyepoxides which can be used in the adhesive composition of the present invention are the epoxy polyethers obtained by reacting a halogen containing epoxide or dihalohydrin, such as epichlorohydrin, epibromohydrin or 3-chloro-1,2-epoxyoctane, with either a polyhydric phenol or a polyhydric alcohol.

Although the preferred polyepoxides are those containing at least two epoxy groups per molecule and also include one or more hydroxyl group per molecule, epoxides containing no hydroxyl groups are also useful.

The polyisocyanates useful for the adhesive composition of this invention include organic isocyanates having at least two isocyanate groups per molecule. The polyisocyanates can be of low, high or intermediate molecular weight and can be any of a wide variety of organic polyisocyanates including ethylene diisocyanate, trimethylene diisocyanate, dodecamethylene diisocyanate, hexamethylene diisocyanate, hexamethylene diisocyanate trimer, tetraethylene diisocyanate, pentamethylene diisocyanate, propoylene-1,2-diisocyanate, 2,3-dimethyl tetramethylene diisocyanate, butylene-1,2-diisocyanate, butylene-1,3-diisocyanate, 1,4-diisocyanato cyclohexane, cyclopentene-1,3-diisocyanate, p-phenylene diisocyanate, 1-methyl phenylene-2,4-diisocyanate, naphthalene-1,4-diisocyanate, toluene diisocyanate, diphenyl-4,4'-diisocyanate, benzene-1,2,4-triisocyanate, xylene-1,4-diisocyanate, xylylene-1,3-diisocyanate, 4,4'-diphenylene methane diisocyanate, 4,4'-diphenylene propane diisocyanate, 1,2,3,4-tetraisocyanato butane, butane-1,2,3-triisocyanate, polymethylene polyphenyl isocyanate, and other polyisocyanates having an isocyanate functionality of at least two which are disclosed in U.S. Patents 3 350 362 and 3 382 215. Polyisocyanates which are polymeric in nature including isocyanate prepolymers of all types are particularly useful for the adhesive composition of this invention.

The adhesive composition of this invention may contain fillers, colorants, dyes etc. Common fillers for instance, such as talc, Kaophile® (an alumina) and metal powders can be present in amounts varying up to about 40% by weight of the total adhesive composition.

In a typical adhesive composition according to this invention an alkylene polyol having an hydroxyl equivalent weight of 371 was obtained by reaction of poly (propylene ether) triol (eq. weight of 1167) and poly (alkylene ether) tetra-ol (equivalent weight about 117) with toluene diisocyanate. This polyol was blended with liquid diglycidyl ether of bisphenol-A (10% by weight). Tin (II) octoate (0.04%) and iron (III) acetoacetate (0.08%) were dissolved in this solution. To this solution was added 23% by weight of Kaophile® 2 filler. The resulting first component was then mixed with an appropriate amount of the second component which was an isocyanate prepolymer (NCO equivalent weight of 275) which contained 24% by weight of the filler. The resulting adhesive composition was then used as an adhesive which was observed to have the following features:

a. Open time (working time prior to gelation) about 15 minutes.
b. 95°C. cure time – two to three minutes.
c. 100% solids.
d. Bonds to a wide variety of substrates.
e. Excellent wetting of substrate surface without a primer.
f. Excellent cohesive strength in the cured bond
g. Flexible bond.

The adhesive composition described just above when tested as an adhesive for panels molded from sheet molding compound (SMC) showed excellent shear strength after curing at 121°C for 30 minutes. Similar bond strength was observed when the system was baked at 218°C for 30 minutes and tested at room temperature. This is contrary to the results obtained using a polyurethane adhesive composition not having epoxy resin in it which failed in adhesive properties when baked at 218°C for 30 minutes.

In the following examples which will further illustrate this invention, the following general procedures were used for preparing, using and testing the adhesive compositions and adhesive bonds formed.

Procedure for Preparing Adhesive Bonds

The two components of the adhesive composition were mixed in appropriate weight amounts under an inert atmosphere such as nitrogen at room temperature. The resulting adhesive composition was then applied in the form of a 9.525 mm bead across the first substrate test sheet which measured 304.8 mm × 01.6 mm × 2.54 mm which was first wiped clean with acetone. After sprinkling the surface of the test sheet with a few 0.762 mm diameter glass beads on top of the adhesive composition to get a final adhesive lap of 0.762 mm, a second test sheet was placed on top of the first test sheet in contact with the adhesive composition and in such a manner as to create a 25.4 mm overlap of the sheets at the bond site. The sandwich test sample at this stage was held at room temperature until the adhesive gelled and was then placed in an oven at 121°C for post curing for 30 minutes. Test samples were cut as 25.4 mm strips from the cured specimens for testing.

Bond Test Procedure

The following tests were carried out using three samples for each test.

(A) Shear strength test at room temperature after samples had been post cured at 121°C for 30 minutes.
(B) Post baking at 218°C for an additional 30 minutes and shear testing at room temperature.
(C) Shear strength test at 82°C after 30 minutes of baking at 218°C.
(D) Shear strength test at room temperature on 121°C post-cure samples after immersion in water at 95°C for 24 hours.
(E) Shear strength test on post-baked samples at 218°C for 30 minutes after immersion for 24 hours in water at 95°C.

EXAMPLE 1

This Example is for comparison purposes and is outside the scope of the present invention. The first component was a poly (propylene ether) triol and tetraol having an hydroxyl equivalent of 382 which also contained 0.08% by weight of iron (III) acetyl acetonate and 0.04% by weight of tin (II) octoate. Kaophile® 2 was also present in 25% by weight. The second component was a polyisocyanate prepolymer obtained by reaction of an excess of oligomerized liquid 4,4'-methylene bis (phenyl isocyanate) with poly (propylene ether) diol (equivalent weight of about 500) having an isocyanate equivalent weight of 275 and was filled with 25% by weight of Kaophile® 2. Fifteen grams of each of the components were mixed and used as an adhesive composition following the above-described procedure using as substrate panels a cured fiberglass reinforced polyester sheet molding compound. Although substrate failure was observed during shear strength testing with the samples following test procedure (A) at 35 kg/cm² cohesive/adhesive failure occured upon testing following procedure (B) at about 3.5 kg/cm². In test (B) an excessive bubbling in the adhesive line was observed.

EXAMPLE 2

The procedure of Example 1 was followed except that the first component was made up of 66.5% by weight of the polyether polyol (eq. wt. 371), 7.5% by weight of diglycidyl ether of bisphenol-A, 0.08% of iron(III) acetyl acetonate, 0.04% by weight of tin(II) octoate and 26% by weight of Kaophile® 2 filler. To 30 g of the first component was mixed with 24.8 g of an isocyanate prepolymer (NCO eg weight 389) containing 26% by weight of Kaophile® 2 and the resulting adhesive composition was tested om SMC samples as in Example 1. The test results are shown in Table 1.

TABLE 1

| Sample No. | Test Procedure | Lap Shear Strength kg/cm² | Failure Mode |
|---|---|---|---|
| 1 | A | 53,9 | DL |
| 2 | A | 54,3 | SB |
| 3 | A | 58,5 | SB |
| 4 | B | 40,3 | DL |
| 5 | B | 55,0 | SB |
| 6 | B | 46,9 | SB |
| 7 | C | 25,2 | DL |
| 8 | C | 25,9 | DL |
| 9 | C | 27,0 | DL |
| 10 | D | 41,0 | DL |
| 11 | D | 47,3 | DL |
| 12 | D | 47,6 | DL |
| 13 | E | 36,4 | SB |
| 14 | E | 35,4 | DL |
| 15 | E | 41,3 | SB/DL |

DL = SMC Delamination at the Joint
SB = Substrate Broke;

This demonstrates that the adhesive composition performs well even after exposure to high temperatures 218°C for as long as 30 minutes.

EXAMPLE 3

The procedure of Example 1 was followed except that the first component was a mixture of 37 g of epoxy resin, 333 g of the polyol described in Example 1, 0.4 g of iron (III) acetyl acetonate, 0.2 g of tin (II) octoate containing 26% by weight of Kaophile® 2 filler. The epoxy resin was prepared by reacting 99.56 g of a diglycidyl ether of bisphenol-A with 15.22 g of 1:2 molar butane diol/maleic anhydride reaction product in the presence of 0.34 g of triphenyl phosphine catalyst at 120°C for about 2 hours. This material had a hydroxyl equivalent weight of 1066 and an epoxy equivalent weight of 267.7. To 30.1 g of the first component was added with mixing 25.7 g of the isocyanate prepolymer of Example 1. The resulting adhesive composition was applied to SMC samples and tested as described above. The test results are shown in Table 2.

TABLE 2

| Sample No. | Test Procedure | Lap Shear Strength kg/cm$^2$ | Failure Mode |
|---|---|---|---|
| 1 | A | 28,0 | SB |
| 2 | A | 48,3 | SB |
| 3 | A | 39,9 | DL |
| 4 | B | 52,5 | SB/DL |
| 5 | B | 41,7 | DL |
| 6 | B | 29,8 | SB |
| 7 | C | 24,2 | SB |
| 8 | C | 21,0 | SB |
| 9 | C | 22,1 | SB |
| 10 | D | 28,7 | SB |
| 11 | D | 44,5 | DL |
| 12 | D | 21,0 | SB |
| 13 | E | 20,7 | SB |
| 14 | E | 35,4 | SB |
| 15 | E | 40,3 | SB/DL |

EXAMPLE 4

The procedure of Example 1 was followed using in the first component 199.5 g of the polyol described in Example 1, 22.16 g of a modified epoxy resin, 0.24 g of iron (III) acetyl acetonate, 0.12 g of tin (II) octoate and 78 g of Kaophile® 2 filler. The modified epoxy resin was prepared by reacting 388.7 g of poly(alkylene ether) diepoxide with 100 g of 1:2 molar butane diol/maleic anhydride reaction product in the presence of 0.9 g of triphenyl phosphine at 120°C for two hours. This first component (30.1g) was mixed with 26.1 g of polyisocyanate prepolymer to form the adhesive composition and was tested as in Example 1 on SMC test panels. The results are given in Table 3.

TABLE 3

| Sample No. | Test Procedure | Lap Shear Strength kg/cm$^2$ | Failure Mode |
|---|---|---|---|
| 1 | A | 36,4 | DL |
| 2 | A | 44,1 | SB |
| 3 | A | 46,6 | DL |
| 4 | B | 32,9 | SB |
| 5 | B | 25,6 | SB |
| 6 | B | 34,3 | SB/DL |
| 7 | C | 25,2 | DL |
| 8 | C | 13,0 | SB |
| 9 | C | 22,4 | DL |
| 10 | D | 25,9 | SB |
| 11 | D | 35,4 | DL |
| 12 | D | 35,7 | DL |
| 13 | E | 34,0 | SB |
| 14 | E | 24,9 | SB |
| 15 | E | 25,9 | SB |

EXAMPLE 5

The procedure of Example 2 was followed using in the first component as polyol 66.4% by weight of bis-hydroxyethyl dimerate (dimerized linoleic acid capped with ethylene oxide), 8.3% by weight of the diglycidyl ether of bisphenol-A, 0.07% by weight of iron(III) acetyl acetonate, 0.04% by weight of tin(II) octoate and 28.3% by weight of Kaophile 2. The two components were mixed as in Example 2 to give an adhesive which was tested on SMC samples. Test A gave a lap shear of 28,7 kg/cm$^2$ and a failure mode of SB. Test B gave a lap shear of 30,1 kg/cm$^2$ and a failure mode of SB, and test procedure D gave a lap shear of 29,4 kg/cm$^2$ and a failure mode of SB.

## Claims

1. An adhesive composition comprising a mixture of a first component comprising a polyol and a polyepoxide, a second component comprising a polyisocyanate, and as a polyurethane catalyst a mixture of organo tin and organo iron compounds in an amount from 0.001 to 5% by weight based on the weight of the first component, wherein the equivalent functionality ratio of hydroxyl to epoxy groups in the first component is within the range of from 98:2 to 50:50 and the equivalent ratio of isocyanate groups in the second component to the combined equivalent of hydroxyl and epoxy groups in the first component is in the range of from 0.8 to 2.0, the epoxy group being equivalent to two hydroxyl groups.

2. The composition of claim 1 wherein the polyisocyanate is an isocyanate prepolymer.

3. The composition of claim 1 wherein the polyol is a polyether polyol.

4. The composition of claim 1 wherein the polyepoxide is the diglycidyl ether of bisphenol-A.

5. The composition of claim 1 wherein the polyepoxide is the reaction product of the diglycidyl ether of bisphenol-A with a 1:2 molar reaction product of butane diol and maleic anhydride.

6. The composition of claim 1 wherein the polyol is the dimerized linoleic acid capped with ethylene oxide.

7. A process for creating a strong, temperature resistant bond between the surfaces of two substrate materials comprising applying between said surfaces an adhesive composition according to any one of claims 1 to 6 and curing said composition at a temperature in the range of from about room temperature up to about 250°C.

8. Use of the composition of any of claims 1 to 6 as an adhesive.

## Patentansprüche

1. Klebstoffzusammensetzung, umfassend ein Gemisch aus einer ersten Komponente, die ein Polyol und ein Polyepoxid umfaßt, einer zweiten Komponente, die ein Polyisocyanat umfaßt, und als Polyurethan-Katalysator ein Gemisch aus zinnorganischen und eisenorganischen Verbindungen in einer Menge von 0,001 bis 5 Gew.-% bezogen auf das Gewicht der ersten Komponente, wobei das Verhältnis der Äquivalente der Funktionalität der Hydroxylgruppen zu Epoxygruppen in der ersten Komponente im Bereich von 98:2 bis 50:50 liegt und das Verhältnis des Äquivalents der Isocyanatgruppen in der zweiten Komponente zum Gesamtäquivalent der Hydroxyl- und Epoxygruppen in der ersten Komponente im Bereich von 0,8 bis 2,0 liegt, wobei die Epoxygruppe mit zwei Hydroxylgruppen äquivalent ist.

2. Zusammensetzung nach Anspruch 1, bei der das Polyisocyanat ein Isocyanat-Präpolymer ist.

3. Zusammensetzung nach Anspruch 1, bei der das Polyol ein Polyetherpolyol ist.

4. Zusammensetzung nach Anspruch 1, bei der das Polyepoxid der Diglycidylether von Bisphenol-A ist.

5. Zusammensetzung nach Anspruch 1, bei der das Polyepoxid das Umsetzungsprodukt des Diglycidylethers von Bisphenol-A mit einem 1:2 molaren Umsetzungsprodukt aus Butandiol und Maleinsäureanhydrid ist.

6. Zusammensetzung nach Anspruch 1, bei der das Polyol dimerisierte Linolsäure ist, die mit Ethylenoxid umgesetzt worden ist.

7. Verfahren zur Schaffung einer starken, temperatur-beständigen Verbindung zwischen den Oberflächen zweier Substrate (Grundwerkstoffe), umfassend das Auftragen einer Klebstoffzusammensetzung nach einem der Ansprüche 1 bis 6 zwischen deren Oberflächen und das Aushärten der Zusammensetzung bei einer Temperatur im Bereich von etwa Raumtemperatur bis etwa 250°C.

8. Verwendung der Zusammensetzung nach einem der Ansprüche 1 bis 6 als Klebstoff.

## Revendications

1. Composition adhésive comprenant un mélange d'un premier composant comportant un polyol et un polyépoxyde, d'un deuxième composant contenant un polyisocyanate et, comme catalyseur de polyuréthane, un mélange de composés d'organo-étain et d'organo-fer en une quantité de 0,001 à 5% en poids, calculé sur le poids du premier composant, le rapport des fonctionnalités équivalentes entre les groupes hydroxyle et époxy dans le premier composant se situant dans l'intervalle allant de 98:2 à 50:50, tandis que le rapport des équivalents des groupes isocyanate dans le deuxième composant vis-à-vis des équivalents combinés des groupes hydroxyle et époxy dans le premier composant se situe dans l'intervalle allant de 0,8 à 2,0, le groupe époxy équivalent à deux groupes hydroxyle.

2. Composition selon la revendication 1, caractérisée en ce que le polyisocyanate est un prépolymère d'isocyanate.

3. Composition selon la revendication 1, caractérisée en ce que le polyol est un polyétherpolyol.

4. Composition selon la revendication 1, caractérisée en ce que le polyépoxyde est l'éther diglycidylique de bisphénol A.

5. Composition selon la revendication 1, caractérisée en ce que le produit réactionnel de l'éther diglycidylique du bisphénol A avec un produit réactionnel 1:2 molaire de butane-diol et d'anhydride maléique.

6. Composition selon la revendication 1, caractérisée en ce que le polyol est l'acide linoléique dimérisé protégé par de l'oxyde d'éthylène.

7. Procédé en vue de créer une liaison robuste et résistant à la température entre les surfaces de deux matières constituant des substrats, caractérisé en ce qu'il consiste à appliquer, entre ces surfaces, une composition adhésive selon l'une quelconque des revendications 1 à 6, puis durcir cette composition à une température se situant dans l'intervalle allant à peu près de la température ambiante jusqu'à environ 250°C.

8. Utilisation de la composition selon l'une quelconque des revendications 1 à 6, comme adhésif.